# EUROPEAN PATENT SPECIFICATION

(11) **EP 3 495 052 B1**
(45) Date of publication and mention of the grant of the patent: **11.08.2021**
(21) Application number: 17836557.3
(22) Date of filing: 11.04.2017
(51) Int. Cl.: B05D 3/08, B05D 7/14, B32B 15/082, B32B 15/09, C09D 133/04

(54) **PAINTED METAL PLATE AND METHOD FOR MANUFACTURING SAME**
LACKIERTE METALLPLATTE UND VERFAHREN ZUR HERSTELLUNG DAVON
PLAQUE MÉTALLIQUE PEINTE ET SON PROCÉDÉ DE FABRICATION

(30) Priority: 02.08.2016 JP 2016152240; 24.03.2017 JP 2017059834
(43) Date of publication of application: 12.06.2019
(73) Proprietor: NIPPON STEEL CORPORATION, Chiyoda-ku Tokyo 100-8071 (JP)
(72) Inventor: SATOU, Masaki, Tokyo 100-8366 (JP); SUZUKI, Seiju, Tokyo 100-8366 (JP); HIRAKU, Masaru, Tokyo 100-8366 (JP); SUGITA, Shuichi, Tokyo 100-8366 (JP)
(74) Representative: Epping - Hermann - Fischer
(86) International application number: PCT/JP2017/014743
(87) International publication number: WO 2018/025450

(56) References cited:
- WO-A1-2010/071150
- JP-A- H0 847 669
- JP-A- S63 151 380
- JP-A- 2005 186 035
- JP-A- 2006 102 671

## Description

### Technical Field

The present invention relates to a coated metal sheet and a method for manufacturing the same.

### Background Art

Coated metal sheets are frequently used in outdoor constructions, civil engineering structures, and the like. Such coated metal sheets suffer stains due to adherence of carbon-based pollutional material (hereinafter also referred to as "hydrophobic carbon") contained in exhaust from automobiles, industrial smoke and/or the like. In particular, stains adhering along rain streaks (hereinafter also referred to as "rain-streak stain") are more noticeable. Such a rain-streak stain always noticeably appears within a relatively short time on a conventional coated metal sheet, and thus there is a demand for a coated metal sheet on which a rain-streak stain is not easily generated.

In recent years, it is proposed to prevent a rain-streak stain by employing a coating having 60° or less of water contact angle, namely a hydrophilic coating. On the surface of the hydrophilic coating having a low water contact angle, it is considered that hydrophobic carbon is more likely to leave the surface with rainwater and thus washed away. An example of a method for hydrophilizing the surface of a coated metal sheet is a method in which a highly hydrophilic top coating is formed from an organic coating material containing an organosilicate or a condensate thereof (PTL 1). Other methods are also proposed, such as a method in which a surface of a coating containing a polysiloxane resin is subjected to corona discharge treatment (PTL 2), and a method in which a surface of a coating formed on a metal sheet is subjected to corona discharge treatment at 200W/m²/min or more (PTL 3). Further, also proposed is a method in which a coating containing particles composed of silicic acid, and a cured compound of a hydrolysable silyl compound is subjected to flame treatment, plasma treatment or corona discharge treatment (PTL 4).

### Citation List

### Patent Literature

PTL 1
   WO1994/6870
PTL 2
   Japanese Patent Application Laid-Open No. H5-59330
PTL 3
   Japanese Patent Application Laid-Open No. 2000-61391
PTL 4
   Japanese Patent Application Laid-Open No. 2006-102671

JP 08 047669 is a document relating to a resin-coated metal material including a fluororesin layer. However, JP 08 047669 does not disclose a flame treatment to the fluororesin layer. Further, JP 08 047669 is silent about that an arithmetic surface roughness of the layer, a silicon atom concentration of the layer, and a methylene iodide sliding angle of the layer.

### Summary of Invention

### Technical Problem

Any one of the techniques described in PTLS 1 to 4 is capable of increasing the hydrophilicity of the surface of a coated metal sheet; however, it is difficult to satisfactorily suppress rain-streak stains using only the above treatment. The reason for the inadequacy can be deduced as follows. When rainwater runs down the surface of a hydrophilic coated metal sheet in a streak, hydrophobic carbon is less likely to flow at the edges of the rain streak where the flow rate is low, and thus stays at the edges. The hydrophobic carbon leaving the surface with the rainwater, meanwhile, is attracted to and moves toward the hydrophobic carbon at the edges. A rain-streak stain is thus generated by slow deposition of the hydrophobic carbon from the edges to the middle of the rain streak.

The present invention is completed in view of the above circumstances. An object of the present invention is to provide a coated metal sheet having a surface on which a rain-streak stain is not easily generated, and a method for manufacturing such a coated metal sheet.

### Solution to Problem

The present invention provides a method for manufacturing a coated metal sheet as follows.
[1] A method for manufacturing a coated metal sheet, the method including: forming a coating on the surface of a metal sheet, the coating having arithmetic average roughness Ra of 0.3 to 3.0 µm, and silicon atom concentration of less than 1.0 atm% on a surface of the coating, the arithmetic average roughness Ra being calculated in accordance with JIS B0601:2013, and the silicon atom concentration being measured by X-ray electron spectroscopy using an AlKα ray as an X-ray source; and subjecting the coating to flame treatment at 30 to 1,000 kJ/m².
[2] The method according to [1], wherein the coating contains a polyester resin or an acrylic resin.
   The present invention also provides a coated metal sheet as follows.
[3] A coated metal sheet including a metal sheet; and a coating having arithmetic average roughness Ra of 0.3 to 3.0 µm, silicon atom concentration of less than 1.0 atm% on a surface of the coating, and a methylene iodide sliding angle of 15° or more and 45° or less on the surface, the coating being disposed on the metal sheet, the arithmetic average roughness Ra being calculated in accordance with JIS B0601:2013, and the silicon atom concentration being measured by X-ray electron spectroscopy using an AlKα ray as an X-ray source, wherein the coating is subjected to flame treatment at 30 to 1,000 kJ/m².
[4] The coated metal sheet according to [3], wherein the coating contains a polyester resin or an acrylic resin.

### Advantageous Effects of Invention

The manufacturing method of the present invention enables obtainment of a coated metal sheet having a surface on which a rain-streak stain is not easily generated.

### Brief Description of Drawings

FIG. 1A is a side view of a burner head of a burner for flame treatment, FIG. 1B is a front view of the burner head, and FIG. 1C is a bottom view of the burner head;
FIG. 2A is a side view of a burner head of another burner for flame treatment, and FIG. 2B is a bottom view of the burner head.

### Description of Embodiments

The present invention relates to a coated metal sheet and a method for manufacturing the same. As described above, the prevention of rain-streak stains is typically brought about by hydrophilizing the surface of a coated metal sheet in conventional methods. However, hydrophobic carbon leaving the surface with rainwater is more likely to be deposited along a rain streak in the methods, and thus a rain-streak stain is more likely to be generated.

The present inventors have found that for preventing a rain-streak stain, a balance is important between (1) hydrophilicity of the surface of a coated metal sheet, and (2) the surface roughness of the coated metal sheet. For example, on a coated metal sheet having a hydrophobic and smooth surface, hydrophobic carbon adhering on the surface is spread on the surface by rainwater and more likely to adhere along a rain streak. In addition, hydrophobic carbon can move easily on the surface. Therefore, hydrophobic carbon adhering on other regions is attracted to and deposited on the hydrophobic carbon adhering along a rain streak, and thus a rain-streak stain is generated in a relatively short time. On a coated metal sheet having a hydrophilic and smooth surface, the movement of hydrophobic carbon adhering on the coating surface is suppressed to some extent; however, hydrophobic carbon leaving the surface with rainwater is slowly deposited along the rain streak. Therefore, a rain-streak stain is generated in time.

The present invention meanwhile forms a coating having arithmetic average roughness Ra of 0.3 to 3.0 µm on the surface of a metal sheet, and further performs flame treatment on the coating. The method enables obtainment of a coated metal sheet having a coating which has suitable surface irregularities and uniformly high hydrophilicity (a coating with a methylene iodide sliding angle of 15° or more and 45° or less). On such a coated metal sheet, hydrophobic carbon is less likely to move on the surface thereof due to the irregularities on the coating surface even when the hydrophobic carbon leaves the surface with rainwater. The hydrophilicity of the coating surface also suppresses the movement of the hydrophobic carbon to some extent. Therefore, hydrophobic carbon is less likely to move on the coating surface even when rainwater runs down the surface of the coated metal sheet in a streak, and thus a rain-streak stain is less likely to be generated.

When the arithmetic average roughness Ra of a coating is more than 3.0 µm, barriers brought by the irregularities on the coating surface become very large. In this case, the generation of a rain-streak stain can be expected to be prevented without improving the hydrophilicity of the coating surface. However, the arithmetic average roughness Ra of a coating more than 3.0 µm results in to too large surface roughness of the coating, thereby reducing the bendability of the coated metal sheet or increasing the possibility of the generation of stains other than the rain-streak stain. On the other hand, when the arithmetic average roughness Ra of a coating is less than 0.3 µm, barriers brought by the irregularities on the surface become unsatisfactory. In this case, hydrophobic carbon is more likely to move even when the hydrophilicity of the coating surface is increased. This may results in a unsatisfactory rain-streak stain prevention function.

As methods for hydrophilizing a coating surface, corona discharge treatment, plasma treatment and the like are known other than the flame treatment as described in above PTL 4. However, corona discharge treatment may not uniformly performed, and generates a higher hydrophilic region and a lower hydrophilic region on the coating surface. Hydrophobic carbon tends to gather around the lower hydrophilic region as a base point, and thus a satisfactory rain-streak stain prevention function cannot be obtained. In addition, plasma treatment requires a large apparatus, as well as a very long period of time for uniformly increasing hydrophilicity. The flame treatment, on the other hand, has an advantage, such that a coating can be effectively and uniformly hydrophilized in a short time without using a large apparatus.

Accordingly, as described above, a coated metal sheet obtained by the method of present invention is less likely to suffer a generation of a rain-streak stain. Therefore, the coated metal sheet is applicable to exterior building materials for various buildings and the like. In the following, each step in a method for manufacturing a coated metal sheet of the present invention will be described.

### (Coating Formation Step)

In the present step, a coating having arithmetic average roughness Ra of 0.3 to 3.0 µm, which is calculated in accordance with JIS B0601:2013 (corresponding to ISO 4287:1997), is formed on the surface of a metal sheet. The arithmetic average roughness Ra is preferably 0.4 to 2.5 µm and more preferably 0.5 to 2.0 µm for reducing the possibility of the generation of not only a rain-streak stain but also stains other than the rain-streak stain. Any method may be employed for adjusting the arithmetic average roughness of the coating surface, and for example, the arithmetic average roughness can be adjusted by, for example, the amounts or a combination of below-described inorganic particles and organic particles. The shape of the coating surface is measured using a stylus-type surface roughness meter.

Further, the coating has silicon atom concentration (hereinafter also referred to as "Si atom concentration" of less than 1.0 atm%, preferably 0.7 atm% or less on the surface of the coating, measured by X-ray electron spectroscopy (hereinafter also referred to as "XPS"). The amount of silicon atoms on the coating surface is a value measured by XPS under the following conditions.
XPS Analyzer: AXIS Nova (manufactured by Kratos Analytical Limited)
X-ray Source: Monochromatized AlKa (1486.6 eV)
Analyzed Region: 300 × 700 µm
Degree of Vacuum in Analysis Chamber: 1.0×10⁻⁷Pa

In above-described PTL 1 and the like, the water resistance of a formed coating is increased by using a coating material containing an organosilicate or a condensate thereof. However, stable hydrophilicity cannot be obtained when the silicon on the coating surface is not satisfactorily concentrated. In addition, a large amount of organosilicate or the like should be used for ensuring the hydrophilization of the coating surface; however, such a coating material has low storage stability, and is difficult to be uniformly applied during the coating formation. In the present invention, meanwhile, the water resistance of a coating is increased by below-described flame treatment substantially without using any compound containing Si, such as organosilicate. The obtained coating thus has a uniform thickness and hydrophilicity.

In the present step, a resin composition is applied on the surface of a metal sheet and cured, thereby obtaining a coating. Any method can be appropriately selected from methods known in the art, for applying the resin composition on the surface of a metal sheet. Examples of the methods for applying the resin composition include a roll coating method, a curtain flow method, a spin coating method, an air-spray method, an airless-spray method, and a dip-and-draw up method. The roll coating method is preferred as the method is more likely to obtain a coating having the above arithmetic average roughness Ra.

The method for curing a resin composition is appropriately selected according to the type of a resin and/or the like in the resin composition, and may be, for example, baking by heating. The temperature during baking treatment is preferably 120°C to 300°C, more preferably 150°C to 280°C and still more preferably 180°C to 260°C from the view point of preventing the decomposition of resins and/or the like in the resin composition and obtaining a uniform coating. The time for the baking treatment is not particularly limited, and preferably 3 to 90 seconds, more preferably 10 to 70 seconds and still more preferably 20 to 60 seconds from the same view point.

The thickness of the coating formed on a metal sheet is appropriately selected according to, for example, the use of the coated metal sheet, and is typically in a range of 3 to 30 µm. The thickness is obtained by a gravimetric method from the specific gravity of the baked coating, and the weight difference of a coated metal sheet between before and after the removal of the coating by sandblasting or the like. Too thin coating may have unsatisfactory durability and hiding property. Too thick coating requires increased manufacturing cost, and may suffer blisters generated during the baking.

Any metal sheet generally used as a building board may be used as a metal sheet on which a resin composition is applied. Examples of the metal sheets include plated steel sheets, such as hot-dip Zn-55%Al alloy-plated steel sheets, steel sheets, such as normal steel sheets and stainless-steel sheets, aluminum plates and copper plates. The metal sheet may have a chemical conversion film, an undercoating film and/or the like formed on the surface within a range that does not hinder the effects of the present invention. Further, the metal sheet may be subjected to embossing, drawing and the like to have irregularities within a range that does not impair the effects of the present invention.

The thickness of the metal sheet is not particularly limited, and is appropriately selected according to the use of the coated metal sheet. For example, the thickness of a metal sheet may be 0.15 to 0.5 mm when the coated metal sheet is used for a metal siding material.

Any resin composition may be used for forming a coating as long as a coating having desired surface roughness can be formed on the metal sheet surface by curing the resin composition. The resin composition to be applied in the present step may be, for example, a composition containing a resin, a curing agent, inorganic particles, organic particles, coloring pigment and the like.

The resin is a component to become a binder of a coating to be obtained by applying the resin composition. Examples of the resins include polymer compounds, such as polyester resins, polyester urethane resins, amino-polyester resins, acrylic resins, acrylic urethane resins, amino-acrylic resins, poly(vinylidene fluoride) resins, polyurethane resins, epoxy resins, polyvinyl alcohol resins, phenol resins and fluororesins. Polyester resins, polyester urethane resins, amino-polyester resins, acrylic resins, acrylic urethane resins, amino-acrylic resins, poly(vinylidene fluoride) resins are preferred for their high resistance to stain adhesion. In particular, polyester resins and acrylic resins are more preferred for their high weather resistance.

The polyester resin may be any resin known in the art prepared by the polycondensation of a polyvalent carboxylic acid and a polyhydric alcohol. Examples of the polyvalent carboxylic acids include terephthalic acid, isophthalic acid, phthalic acid and anhydrides thereof; aromatic dicarboxylic acids, such as 2,6-naphthalenedicarboxylic acid, 2,7-naphthalenedicarboxylic acid and anhydrides thereof, aliphatic dicarboxylic acids, such as succinic acid, adipic acid, azelaic acid, sebacic acid, dodecanedicarboxylic acid 1,4-cyclohexanedicarboxylic acid and anhydrides thereof; lactones, such as γ-butyrolactone and ε-caprolactone; and polyvalent carboxylic acids having the valency of 3 or more, such as trimellitic acid, trimesic acid, pyromellitic acid. The polyester resin may include only one structure derived from the polyvalent carboxylic acid, or two or more structures derived from the polyvalent carboxylic acids.

Examples of the polyhydric alcohols include glycols, such as ethylene glycol, 1,2-propanediol, 1,3-propanediol, 1,2-butanediol, 1,3-butanediol, 1,4-butanediol, 1,2-pentanediol, 1,4-pentanediol, 1,5-pentanediol, 2,3-pentanediol, 1,4-hexanediol, 2,5-hexanediol, 1,5-hexanediol, 3-methyl-1,5-pentanediol, diethylene glycol, triethylene glycol, 1,2-dodecanediol, 1,2-octadecanediol, neopentyl glycol, 1,4-cyclohexanediol, 1,4-cyclohexanedimethanol, bisphenol A alkylene oxide adduct and bisphenol S alkylene oxide adduct; and polyhydric alcohols having the valency of 3 or more, such as trimethylolpropane, glycerin and pentaerythritol. The polyester resin may include only one structure derived from the polyhydric alcohol, or two or more structures derived from the polyhydric alcohols.

When the above-described resin is a polyester resin, the number average molecular weight thereof measured by gel permeation chromatography (hereinafter also referred to as "GPC") is preferably 2,000 to 8,000. The number average molecular weight of less than 2,000 may reduce the press formability of the coated metal sheet, thereby possibly generating a coating crack. The number average molecular weight of more than 8,000 reduces the cross-linking density of the obtained coating, thereby possibly reducing the weather resistance of the coating. In view of balance between the press formability and the weather resistance, the number average molecular weight is particularly preferably 3,000 to 6,000.

The acrylic resin may be any resin that contains a (meth)acrylate as a monomer component, and may contain other monomer components as a part thereof in addition to the (meth)acrylate. Herein, a (meth)acrylate refers to an acrylate or a methacrylate. Examples of the monomer components constituting acrylic resins include (meth)acrylates and (meth)acrylic cycloalkyl esters both including an ester group having 1 to 18 carbon atoms, such as methyl (meth)acrylate, ethyl (meth)acrylate, n-propyl (meth)acrylate, isopropyl (meth)acrylate, n-, i-, or t-butyl (meth)acrylate, hexyl (meth)acrylate, 2-ethylhexyl (meth)acrylate, octyl (meth)acrylate, decyl (meth)acrylate, laulyl (meth)acrylate, cyclohexyl (meth)acrylate; and (meth)acrylic hydroxy esters including a hydroxyalkyl ester group having 2 to 8 carbon atoms, such as 2-hydroxyethyl (meth)acrylate, 2-hydroxypropyl (meth)acrylate, 3-hydroxypropyl (meth)acrylate and hydroxybutyl (meth)acrylate; N-substituted (meth)acrylamide monomers, such as N-methylol (meth)acrylamide, N-butoxymethyl (meth)acrylamide and N-methoxymethyl (meth)acrylamide; aromatic vinyl monomers, such as styrene, vinyl toluene, 2-methyl styrene, t-butyl styrene and chlorostyrene; (meth)acrylic acid, and glycidyl (meth)acrylate. The acrylic resin may include only one of the monomer components or two or more of the monomer components.

When the above-described resin is an acrylic resin, the number average molecular weight thereof is not particularly limited, but for obtaining a coating excellent in hardness and weather resistance, the number average molecular weight is preferably 1,000 to 200,000, more preferably 5,000 to 100,000, and still more preferably 10,000 to 50,000.

The amount of the resin in a resin composition is appropriately selected according to the use of the coated metal sheet or the type of the resin. In view of the strength of a coating to be obtained, the resin content is preferably 25 to 60 parts by mass and more preferably 30 to 50 parts by mass based on 100 parts by mass of the solid content of the resin composition.

The curing agent contained in the resin composition is a component for adjusting the nature, property and the like of the coating (for example, coating surface hardness and durability), and is, for example, a composition capable of cross-linking the above-described resin. The curing agent is appropriately selected according to the type of the resin. When the above-described resin is a polyester resin, for example, the curing agent is preferably a melamine curing agent. Examples of the melamine curing agents include methylated melamine resin curing agents, such as methylol melamine methyl ether; n-butylated melamine resin curing agents, such as methylol melamine butyl ether; and methyl/n-butyl mixed etherified melamine resin curing agents.

The amount of the curing agent in a resin composition is appropriately selected according to the use of the coated metal sheet or the type of the resin. The curing agent content is preferably 5 to 20 parts by mass, and more preferably 7 to 15 parts by mass based on the resin. The amount of the curing agent within the above range gives suitable curability to the obtained coating.

When the resin composition contains inorganic particles and/or organic particles, it becomes easier to adjust the arithmetic average roughness Ra of an obtained coating to fall within a range of 0.3 to 3.0 µm. The average particle diameter of the inorganic particles or the organic particles is preferably 4 to 80 µm, and more preferably 10 to 60 µm. The average particle diameter of the inorganic particles or the organic particles within the above range enables easy adjustment of the arithmetic average roughness Ra of the obtained coating to fall within the above range. The average particle diameter of the inorganic particles or the organic particles is measured by the coulter counter method. The shape of the inorganic particles and the organic particles is not particularly limited, but preferably in a substantially spherical shape for easier adjustment of the arithmetic average roughness Ra to a desired value.

Examples of the inorganic particles include silica, barium sulfate, talc, calcium carbonate, mica, glass beads and glass flakes. Examples of the organic particles include resin beads made of an acrylic resin or a polyacrylonitrile resin. Those resin beads may be produced by methods known in the art, or may be commercial products. Examples of the commercially available acrylic resin beads include "TAFTIC AR650S (average particle size 18 µm)," "TAFTIC AR650M (average particle size 30 µm)," "TAFTIC AR650MX (average particle size 40 µm)," "TAFTIC AR650MZ (average particle size 60 µm)" and "TAFTIC AR650ML (average particle size 80 µm)" all manufactured by TOYOBO CO., LTD. Examples of the commercially available polyacrylonitrile resin beads include "TAFTIC A-20 (average particle size 24 µm)," "TAFTIC YK-30 (average particle size 33 µm)," "TAFTIC YK-50 (average particle size 50 µm)" and "TAFTIC YK-80 (average particle size 80 µm)" all manufactured by TOYOBO CO., LTD.

The amount of the inorganic particles and/or the organic particles in the resin composition is appropriately selected according to a desired surface roughness Ra of the coating or the type of the particles. For adjusting the arithmetic average surface roughness Ra of the obtained coating to fall within the above range, the total amount of the inorganic particles and/or the organic particles is preferably 2 to 40 parts by mass and more preferably 10 to 30 parts by mass based on 100 parts by mass of the solid content of the resin composition.

The resin composition may further contain coloring pigment as necessary. The average particle diameter of the coloring pigment may be, for example, 0.2 to 2.0 µm. Examples of the coloring pigment include titanium oxide, iron oxide, iron oxide yellow, phthalocyanine blue, carbon black and cobalt blue. When the resin composition contains coloring pigment, the amount thereof is preferably 20 to 60 parts by mass, and more preferably 30 to 55 parts by mass based on 100 parts by mass of the solid content of the resin composition.

The resin composition may further contain a solvent, such as an organic solvent as necessary. When the solvent is an organic solvent, any organic solvent may be used as long as the above-described resin, the curing agent and the inorganic particles and/or the organic particles can be satisfactorily dissolved or dispersed. Examples of the organic solvents include hydrocarbon solvents, such as toluene, xylene, Solvesso (Registered Trademark) 100 (Trade name; manufactured by ExxonMobil Chemical), Solvesso (Registered Trademark) 150 (Trade name; manufactured by ExxonMobil Chemical), Solvesso (Registered Trademark) 200 (Trade name; manufactured by ExxonMobil Chemical); ketone solvents, such as methyl ethyl ketone, methyl isobutyl ketone, cyclohexanone and isophorone; ester solvents, such as ethyl acetate, butyl acetate and ethylene glycol monoethyl ether acetate; alcohol solvents, such as methanol, isopropyl alcohol and n-butyl alcohol; ether alcohol solvents, such as ethyleneglycol monoethyl ether and diethylene glycol monobutyl ether. The resin composition may include only one of these or two or more of these. From the compatibility and/or the like with the resin, xylene, Solvesso (Registered Trademark) 100, Solvesso (Registered Trademark) 150, cyclohexanone and n-butyl alcohol are preferred.

Any method may be employed for preparing the resin composition. For example, the resin composition may be prepared by mixing the above materials, followed by stirring or dispersing the same, in the same manner as coating materials known in the art.

### (Flame Treatment Step)

In the present step, a coating having arithmetic average roughness in the above range is subjected to flame treatment in a range of 30 to 1,000 kJ/m². Subjecting the coating to the flame treatment enables introduction of OH groups into the coating surface, thereby increasing the hydrophilicity of the coating surface. The flame treatment uniformly hydrophilizes the whole coating surface. Therefore, as described above, the movement of the hydrophobic carbon on the coating surface can be satisfactorily suppressed.

The flame treatment may be, for example, a method in which a metal sheet having a coating formed thereon is placed on a carrier of a belt conveyor or the like, and flame is projected from a burner for flame treatment while the metal sheet is moved in a predetermined direction.

The amount of the flame treatment is more preferably 100 to 600 kJ/m². Herein, "amount of flame treatment (flame treatment amount)" is an amount of heat per unit area of a coated metal sheet, which is calculated on the basis of the supply amount of a combustion gas, such as LP gas. The flame treatment amount can be adjusted by the distance between the burner head of the burner for flame treatment and the coating surface, the conveyance speed of the coating, and/or the like. The flame treatment amount of less than 30 kJ/m² may result in uneven treatment, and it is difficult to evenly hydrophilize the coating surface. The flame treatment amount of more than 1,000 kJ/m² meanwhile may cause the coating to be oxidized and thus to yellow.

When the coating contains a polyester resin or an acrylic resin, the coating surface after the flame treatment has a ratio of preferably 0.25 or more, and more preferably 0.30 or more between the concentrations of oxygen atoms and carbon atoms (O atom concentration / C atom concentration). The concentration is measured by X-ray electron spectroscopy using an AlKa ray as an X-ray source. The ratio between the concentrations of oxygen atoms and carbon atoms is indicative of the introduction of oxygen into the coating surface. The ratio of 0.25 or more indicates that a satisfactory amount of OH groups and the like is introduced into the coating surface. When the coating is subjected to corona discharge treatment, it is possible to bring the ratio between the concentrations of oxygen atoms and carbon atoms to fall within the above range. However, as described above, it is difficult to uniformly hydrophilize the coating surface by the corona discharge treatment. Whether the coating surface is uniformly treated or not is difficult to determine by the ratio between the concentrations of oxygen atoms and carbon atoms, but can be confirmed by the following methylene iodide sliding angle.

The methylene iodide sliding angle on the coating surface after the flame treatment of the present invention is preferably 15° or more and 45° or less, and more preferably 20° or more and 35° or less. The methylene iodide sliding angle increases when a coating surface has high hydrophilicity or high roughness. In particular, when the hydrophilicity of the coating surface is uneven, the methylene iodide sliding angle becomes more than 45°. For example, when a coating is surface treated by the corona discharge treatment, the methylene iodide sliding angle becomes more than 45°. In the present invention, in contrast, the flame treatment is performed and thus the methylene iodide sliding angle can be 45° or less. The methylene iodide sliding angle of less than 15° cannot satisfactorily increase the hydrophilicity of the coating surface, and thus rain-streak stains cannot be satisfactorily prevented. The flame treatment can easily increase the methylene iodide sliding angle to 15° or more.

The reason why the methylene iodide sliding angle becomes larger than 45° when the corona discharge treatment is performed can be deduced as follows. Two coatings are assumed to be present as follows: both of the coatings have hydrophilic groups and hydrophobic groups in the same number on the respective surfaces, and one of the coatings has even distribution of the hydrophilic groups and hydrophobic groups while the other has uneven distribution of the hydrophilic groups and hydrophobic groups. The static contact angles of both coatings become substantially the same as they are less likely to be influenced by the distribution of the hydrophilic groups and hydrophobic groups. The dynamic contact angles (methylene iodide sliding angle) of the coatings, on the other hand, are influenced by the distribution of the hydrophilic groups and hydrophobic groups, and thus take different values. When the distribution of the hydrophilic groups and hydrophobic groups is uneven, a methylene iodide drop is adsorbed to a portion having a high hydrophilic group density, during the measurement of the methylene iodide sliding angle. Therefore, when the distribution of the hydrophilic groups and hydrophobic groups is uneven, the methylene iodide drop is less likely to move, and thus the sliding angle becomes large compared to when the distribution is even. As described above, the corona discharge treatment can introduce a large number of hydrophilic groups into the coating surface, but the distribution thereof becomes uneven. Therefore, the film subjected to the corona discharge treatment has a large sliding angle of more than 45°.

The methylene iodide sliding angle is measured as follows. On a horizontally held coating, 2 µl of methylene iodide is dropped. Subsequently, the inclination angle (angle between the horizontal plane and the coating) of the coating is increased at the rate of 2 degrees/min using a contact angle measuring device. During this procedure, the methylene iodide drop is observed using a camera attached to the contact angle measuring device. The inclination angle at the moment when the methylene iodide drop starts falling is determined. This procedure is repeated 5 times, and the average angle is used as the methylene iodide sliding angle of the coating. The moment when the methylene iodide drop starts falling is the moment when both of the bottom edge and top edge of the methylene iodide drop in the gravity direction start moving.

Hereinafter, an example of the burner for flame treatment usable for the flame treatment of the present invention will be described; however, the flame treatment method is not limited thereto.

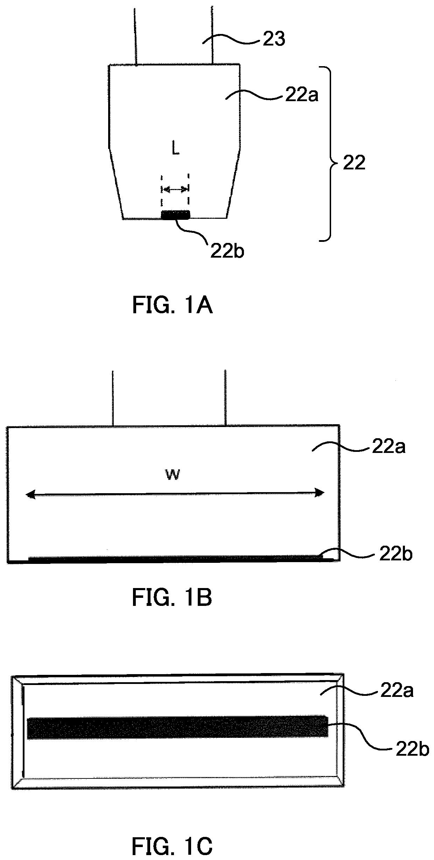

A burner for flame treatment includes a gas supply pipe for supplying a combustible gas, a burner head for burning the combustible gas supplied from the gas supply pipe, and a support member for supporting them. FIGS. 1A to 1C schematically illustrate the burner head of the burner for flame treatment. FIG. 1A is a side view of the burner head, FIG. 1B is a front view thereof, and FIG. 1C is a bottom view thereof. For convenience sake, a part corresponding to burner port 22b is emphasized by illustrating with a thick line in FIGS. 1A and 1B; however, actually, burner port 22b cannot be seen from the side or the front.

Burner head 22 includes square-column shaped housing 22a connected to gas supply pipe 23, and burner port 22b disposed on the underside of the housing. Burner head 22 burns combustible gas supplied from gas supply pipe 23 at burner port 22b.

The structure inside housing 22a of burner head 22 may be the same as the structure of a generally used burner for flame treatment, and may have, for example, a channel formed therein for allowing the combustible gas supplied from gas supply pipe 23 to flow toward burner port 22b. The width of housing 22a in a front view may be appropriately selected according to the width of a coating to be subjected to the flame treatment. The width of housing 22a in a side view is appropriately selected according to the width (represented by L in FIG. 1A) of burner port 22b in the conveyance direction of a coating.

Burner port 22b is a through hole provided in the underside of housing 22a. Burner port 22b may have any shape, such as a rectangular or circular shape. For performing the flame treatment uniformly in the width direction of a coating, the rectangular shape is particularly preferred. Further, the width (represented by W in FIG. 1B) of burner port 22b in the direction perpendicular to the conveyance direction of the coating may be the same as or longer than the width of the coating to be subjected to the flame treatment, and, for example, may be about 40 to 50 cm. The width (represented by L in FIG. 1A) of burner port 22b in the conveyance direction of the coating can be appropriately set according to the discharge stability and/or the like of the combustible gas, and may be about 1 to 8 mm.

Gas supply pipe 23 is a gas channel connected to burner head 22 at one end, and to a gas mixing section (not illustrated) at the other end. The gas mixing section is connected to a combustion gas source (not illustrated), such as a combustion gas cylinder, and a combustion-assisting gas source (not illustrated), such as an air cylinder, an oxygen cylinder, compressed air, or air by a blower. The gas mixing section is a member for previously mixing the combustion gas and the combustion-assisting gas. The oxygen concentration in the combustible gas (mixed gas of the combustion gas and combustion-assisting gas) supplied from the gas mixing section to gas supply pipe 23 is preferably at a constant level. The gas mixing section preferably has an oxygen feeder for supplying oxygen to gas supply pipe 23 as necessary.

Examples of the combustion gas include hydrogen, liquefied petroleum gas (LPG), liquefied natural gas (LNG), acetylene gas, propane gas and butane. As it is easier to form a desired flame, LPG or LNG is preferred, and LPG is particularly preferred. Examples of the combustion-assisting gas include air and oxygen, and the air is preferred for the handling and/or the like.

The mixing ratio between the combustion gas and combustion-assisting gas in the combustible gas supplied to burner head 22 via gas supply pipe 23 can be appropriately set according to the types of the combustion gas and the combustion-assisting gas. For example, when the combustion gas is LPG and the combustion-assisting gas is air, the volume of the air is preferably 24 to 27, more preferably 25 to 26 and still more preferably 25 to 25.5 relative to one volume of LPG. Further, when the combustion gas is LNG and the combustion-assisting gas is air, the volume of the air is preferably 9.5 to 11, more preferably 9.8 to 10.5 and still more preferably 10 to 10.2 relative to one volume of LNG.

In the burner for flame treatment, the flame treatment of a coating is performed while the coating is moved. The flame treatment can be performed by discharging combustible gas from burner port 22b of burner head 22 toward the coating, and burning the combustible gas. The distance between burner head 22 and the coating is appropriately selected according to the flame treatment amount as described above, and may be typically about 10 to 120 mm, preferably 25 to 100 mm and more preferably 30 to 90 mm. A too short distance between the burner head and the coating may bring the burner head in contact with the coating due to a curve or the like of the metal sheet. Too long distance between the burner head and the coating requires a large amount of energy for the flame treatment. During the flame treatment, flame may be projected perpendicular to the coating surface from the burner for flame treatment, or alternatively, the flame may be projected toward the coating surface at a predetermined angle relative to the coating surface from the burner for flame treatment.

The moving speed of the coating is appropriately selected according to the flame treatment amount, and typically 5 to 70 m/min is preferred, 10 to 50 m/min is more preferred, and 20 to 40 m/min is still more preferred. Moving the coating at the speed of 5 m/min or more enables effective flame treatment. Too high moving speed of the coating meanwhile may cause an air current due to the movement of the coating, and thus result in unsatisfactory flame treatment.

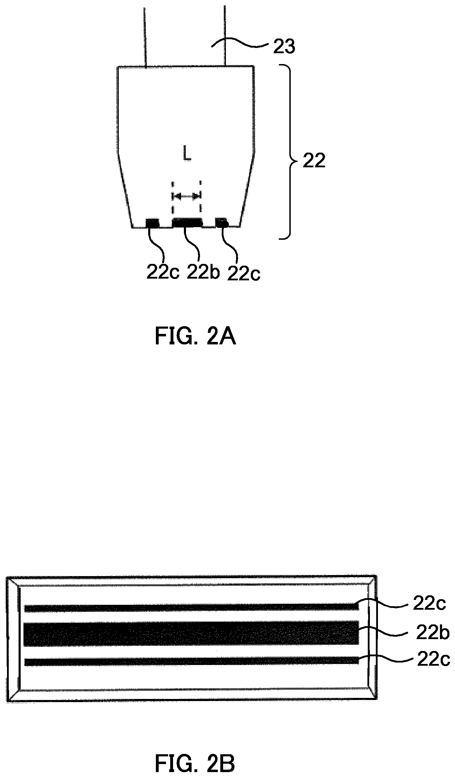

In the above embodiment, burner head 22 has only one burner port 22b in housing 22a; however, the structure of burner head 22 is not limited thereto. For example, as illustrated in FIGS. 2A and 2B, burner head 22 may further have auxiliary burner port 22c parallel to burner port 22b. FIG. 2A is a side view of such a burner head, and FIG. 2B is a bottom view of the burner head. For convenience sake, parts corresponding to burner port 22b and auxiliary burner port 22c are emphasized by illustrating with a thick line in FIG. 2A; however, actually, burner port 22b and auxiliary burner port 22c cannot be seen from the side or the front. The distance between burner port 22b and auxiliary burner port 22c is preferably 2 mm or more, and may be 2 mm to 7 mm. In this instance, housing 22a has a structure such that a very small amount of combustible gas passes through auxiliary burner port 22c. The amount of the combustible gas discharged from auxiliary burner port 22c is preferably 5% or less and more preferably 3% or less relative to the amount of the combustible gas discharged from burner port 22b. The flame generated at auxiliary burner port 22c exerts little influence on the surface treatment of the coating, but the presence of auxiliary burner port 22c increases the rectilinearity of the combustible gas discharged from burner port 22b, thereby forming a steadier flame.

The present step may further have preheating treatment for heating the coating surface to 40°C or more before the flame treatment. When a flame is applied to a coating formed on the surface of a metal sheet having high thermal conductivity (for example, a thermal conductivity of 10 W/mK or more), water vapor generated by the combustion of the combustible gas is cooled and becomes water which temporarily stays on the coating surface. The flame treatment may be inhibited by the water that absorbs energy during the flame treatment to become water vapor. Preheating of the coating surface (metal sheet) can suppress the generation of water during the application of the flame.

The method for preheating a coating is not particularly limited, and a heating device typically referred to as a drying oven may be used. For example, a batch-type drying oven (also referred to as a "safe-type oven") may be used. Examples of the batch-type drying ovens include a low temperature-thermostat (Model: Mini-Katarina MRLV-11, manufactured by Isuzu Seisakusho Co., Ltd), an automatic ejection dryer (Model: ATO-101, manufactured by Tojo Netsugaku Co., Ltd) and a simple dryer having an explosion-proof specification (Model: TNAT-1000, manufactured by Tojo Netsugaku Co., Ltd).

By performing the coating formation step and the flame treatment, a coated metal sheet can be obtained, which includes a metal sheet, and a coating, disposed on the metal sheet, having arithmetic average roughness Ra of 0.3 to 3.0 µm, Si atom concentration of less than 1.0 atm% on a surface of the coating, and a methylene iodide sliding angle of 15° or more and 45° or less on the surface (the arithmetic average roughness Ra is calculated in accordance with JIS B0601:2013, and the Si atom concentration is measured by X-ray electron spectroscopy using an AlKa ray as an X-ray source). The coated metal sheet has high uniform hydrophilicity on the coating surface thereof, and a very high rain-streak stain resistance.

### Examples

Hereinafter, the present invention will be described more specifically with reference to Examples. However, these Examples do not limit the scope of present invention.

Coated metal sheets were produced by the methods described below, and the rain-streak stain prevention function of each coated metal sheet was evaluated.

### 1. Preparation of Metal Sheet

A A-4 size hot-dip Zn-55%Al alloy-plated steel sheet having a sheet thickness of 0.27 mm and a per-side plating deposition amount of 90g/m² was prepared as a metal sheet, and the surface thereof was alkali-degreased. Application-type chromate (NRC300NS, manufactured by Nippon Paint Co., Ltd.) was then applied on the surface of the metal sheet to have a Cr deposition amount of 50 mg/m². Further, an epoxy resin based primer coating material (700P, manufactured by Nippon Fine Coatings Inc.) was applied to have a dry film thickness of 5 µm using a roll coater. Finally, the base sheet was baked at a peak plate temperature of 215°C, thereby obtaining a plated steel sheet having a primer coating formed thereon (hereinafter, also simply referred to as a "plated steel sheet").

### 2. Formation of Coating

### 2-1. Formation of Polyester Resin-Based Coating (Examples 1 to 12, Comparative Examples 1 to 10 and Reference Examples 1 and 2)

A polyester resin/melamine coating material that serves as a base was obtained by mixing a high polymer polyester resin having a number-average molecular weight of 5,000, a glass transition temperature of 30°C and a hydroxyl value of 28 mgKOH/g (manufactured by DIC Corporation) and a methylated melamine resin having 90 mol% of methoxy groups (CYMEL 303, manufactured by Mitsui Cytec Co., Ltd.). The polyester resin/methylated melamine resin ratio was 70/30.

To the polyester resin/melamine coating material, at least one of the following was added in a composition ratio shown in Table 1 (the amount relative to the solid content of a resin composition) according to a desired surface roughness Ra of a coating (surface roughness Ra of a coating shown in Table 2): mica having an average particle size of 10 µm (SJ-010, manufactured by Yamaguchi Mica Co.,Ltd.), hydrophobic silica having an average particle size of 5.5 µm (SILYSIA 456, manufactured by Fuji Silysia Chemical, Ltd.), hydrophobic silica having an average particle size of 12 µm (SILYSIA 476, manufactured by Fuji Silysia Chemical, Ltd.), polyacrylonitrile resin-based microparticles having an average particle size of 24 µm (TAFTIC A-20, manufactured by Toyobo Co., Ltd.) and acrylic resin-based microparticles having an average particle size of 40 µm (TAFTIC AR650MX, manufactured by Toyobo Co., Ltd.). The total amount of the added inorganic particles and organic particles was 3 to 24 mass% relative to the solid content of a resin composition to be prepared. Titanium oxide (JR-603, manufactured by Tayca Corporation) having an average particle size of 0.28 µm was also added as coloring pigment in a composition ratio shown in Table 1 (38 to 49 mass% relative to the solid content of the resin composition). The amount of the added titanium oxide was adjusted so that the total amount of the inorganic particles, organic particles and titanium oxide relative to the solid content of the resin composition became 52 to 62 mass%.

Subsequently, 1 mass% of dodecylbenzenesulfonic acid relative to the solid content of the polyester resin/melamine coating material was added as a catalyst. Dimethyl amino ethanol was further added, and a resin composition for forming a coating was obtained. Dimethyl amino ethanol was added in an amount such that the amine equivalent thereof is 1.25 times the acid equivalent of dodecylbenzenesulfonic acid.

Each resin composition was applied on the plated steel sheet to have a dry film thickness of 18 µm using a roll coater, and baked at a peak plate temperature of 225°C. Accordingly, coatings were obtained each having arithmetic average roughness Ra, calculated in accordance with JIS B0601:2013, in a range of 0.24 to 3.1 µm (coatings of Examples 1 to 12, Comparative Examples 1 to 10 and Reference Examples 1 and 2). The shape of the surface of the coating was measured using the following stylus-type surface roughness meter.
Used Device: Dektak150, manufactured by ULVAC-PHI, Inc.
Measuring condition: Stylus type
Vertical Resolution: 0.1 nm/6.5 µm, 1 nm/65.5 µm, and 8 nm/524 µm
Stylus pressure: 3 mg
Scanning time: 60 seconds
Stylus radius: 2.5 µm
Scanning distance: 1 mm

### 2-2. Formation of Acrylic Resin-Based Coating (Examples 13 to 16 and Comparative Examples 11 to 16)

Mixed and kneaded using a bead mill were 37.85 parts by mass (solid content) of an acrylic resin (Aroset 5534-SB60, manufactured by Nippon Shokubai Co., Ltd.), 37.85 parts by mass of titanium oxide pigment having an average particle size of 0.28 µm (JR-603, manufactured by Tayca Corporation), 10 parts by mass of cyclohexanone and 25 parts by mass of butanol. Subsequently, 15.06 parts by mass (solid content) of a melamine resin (Super Beckamine L-155-70, manufactured by DIC Corporation) was added as a curing agent, and thus an acrylic resin/melamine coating material that serves as a base was prepared.

To the acrylic resin/melamine coating material, at least one of the following was added to obtain a resin composition in a composition ratio shown in Table 1 (the amount relative to the solid content of a resin composition) according to a desired surface roughness Ra of a coating (surface roughness Ra of a coating shown in Table 2): mica having an average particle size of 10 µm (SJ-010, manufactured by Yamaguchi Mica Co.,Ltd.), hydrophobic silica having an average particle size of 5.5 µm (SILYSIA 456, manufactured by Fuji Silysia Chemical, Ltd.), hydrophobic silica having an average particle size of 12 µm (SILYSIA 476, manufactured by Fuji Silysia Chemical, Ltd.), polyacrylonitrile resin-based microparticles having an average particle size of 24 µm (TAFTIC A-20, manufactured by Toyobo Co., Ltd.) and acrylic resin-based microparticles having an average particle size of 40 µm (TAFTIC AR650MX, manufactured by Toyobo Co., Ltd.). The total amount of the added inorganic particles and organic particles was 19 to 24 mass% relative to the solid content of a resin composition to be prepared. Titanium oxide (JR-603, manufactured by Tayca Corporation) having an average particle size of 0.28 µm was also added as coloring pigment in a composition ratio shown in Table 1 (38 to 40 mass% relative to the solid content of the resin composition). The total amount of the added inorganic particles and organic particles was 59 to 62 mass% relative to the solid content of the resin composition.

Each resin composition was applied on the plated steel sheet to have a dry film thickness of 18 µm using a roll coater, and baked at a peak plate temperature of 225°C. Accordingly, coatings were obtained each having arithmetic average roughness Ra, calculated in accordance with JIS B0601:2013, in a range of 0.54 to 2.02 µm (Examples 13 to 16, Comparative Examples 11 to 16). The shape of the surface of the coating was measured using the above described stylus-type surface roughness meter.

### 3. Surface Treatment

### 3-1. Flame Treatment (Examples 1 to 16, Comparative Examples 7 and 8, and Reference Examples 1 and 2)

A plated steel sheet having the above-described coating formed thereon was subjected to heat treatment under the conditions such that a set temperature is 80°C and wind speed is 2.0 m/s for 5 minutes using an automatic ejection dryer (Model: ATO-101, manufactured by Tojo Netsugaku Co., Ltd).

Subsequently, the plated steel sheet having the above-described coating formed thereon was placed on a carrier, and flame treatment was performed on the coating. F-3000 manufactured by Flynn Burner Corporation (USA) was used as a burner for flame treatment. Used as a combustible gas was a mixed gas obtained by mixing LP gas (combustion gas) and clean dry air (LP gas : clean dry air (volume ratio) = 1 : 25) using a gas mixer. The flow rate of each gas is adjusted such that, for 1 cm² of a burner port of the burner, the flow rate of LP gas (combustion gas) was 0.48 to 2.61 L/min, and the flow rate of the clean dry air was 12.00 to 65.25 L/min. The length (represented by L in FIG. 1A) of the burner port of the burner head in the conveyance direction of a coating was set to 4 mm. The length (represented by W in FIG. 1B) of the burner port of the burner head in the direction perpendicular to the conveyance direction was set to 450 mm. The distance between the burner port of the burner head and the coating surface was set to 15 to 50 mm according to a desired flame treatment amount. The conveyance speed of the coating was changed within a range of 10 to 70 m/min for adjusting the flame treatment amount to become a value shown in Table 2. The flame treatment amount in each of Examples and Comparative Examples is shown in Table 2 below.

### 3-2. Corona Discharge Treatment (Comparative Examples 9, 10 and 13 to 16)

The coating surface of a plated steel sheet having the above-described coating formed thereon was subjected to corona discharge treatment. A corona discharge treatment device manufactured by Kasuga Denki, Inc. having the following specification was used for the corona discharge treatment.

### (Specification)

- Electrode: Ceramic electrode
- Electrode length: 430 mm
- Output: 310 W

Each coating was subjected to the corona discharge treatment once. The corona discharge treatment amount was adjusted by the treatment speed. Specifically, treating at 4.8 m/min or 2.8 m/min enabled the corona discharge treatment amount to become 150 W·min/m² or 250 W·min/m².

### [Evaluation]

For each of the coated metal sheets obtained in Examples and Comparative Examples, the Si atom concentration, O atom concentration and C atom concentration on the coating surface, the water contact angle, and the methylene iodide sliding angle were measured, and the rain-streak stain resistance was evaluated, as follows. The results are shown in Table 2.

### (1) Measurement of Si, O and C atom concentrations on Coating Surface

The Si, O and C atom concentrations on the coating surface were measured using an XPS analyzer (AXIS Nova, manufactured by Kratos Analytical Limited) under the following conditions.
X-ray Source: Monochromatized AlKa (1486.6 eV)
Analyzed Region: 300 × 700 µm
Degree of Vacuum in Analysis Chamber: 1.0×10⁻⁷ Pa

### (2) Measurement of Water Contact Angle

The water contact angle was measured on the coating surface of each of the coated metal sheets produced in Examples, Comparative Examples and Reference Examples. The measurement was performed by forming a 0.01 cc droplet of purified water in a thermo-hygrostat chamber at the atmospheric temperature of 23±2°C and the relative humidity of 50±5%, and using contact angle measuring device DM901 manufactured by Kyowa Interface Science Co., Ltd.

### (3) Measurement of Methylene Iodide Sliding Angle

On a horizontally held coating, 2 µl of methylene iodide was dropped. Subsequently, the inclination angle of the coating (angle between the horizontal plane and the coating) was increased at the rate of 2 degrees/min using a contact angle measuring device (DM901, manufactured by Kyowa Interface Science Co., Ltd.). During this procedure, the methylene iodide drop was observed using a camera attached to the contact angle measuring device. The inclination angle at the moment when the methylene iodide drop started falling was determined. This procedure was repeated 5 times, and the average angle was used as the methylene iodide sliding angle of the coating. The moment when both of the bottom edge and top edge of the methylene iodide drop in the gravity direction started moving was used as the moment when the methylene iodide drop started falling.

### (4) Evaluation of Rain-Streak Stain Resistance

The rain-streak stain resistance was evaluated as follows.

Each of the coated metal sheets produced in Examples, Comparative Examples and Reference Examples was attached on a vertical exposure board. Above the coated metal sheet, a corrugated sheet was attached at an angle of 20° relative to the ground. The corrugated sheet was attached so that rainwater ran down the surface of the coated metal sheet in a streak. In this state, an outdoor exposure test was performed for 6 months, and then the stain adhesion state was observed. The rain-streak stain resistance was evaluated using brightness difference (ΔL) of the coated metal sheet between before and after the exposure as follows.
Poor: ΔL was 2 or more (stain was noticeable)
Good: ΔL was 1 or more and less than 2 (rain-streak stain was not noticeable, but visible)
Excellent: ΔL was less than 1 (rain-streak stain was hardly visible)

**[Table 1]**

| | | Resin | | Inorganic Particles and Organic Particles | | | | | Coloring Pigment |
|---|---|---|---|---|---|---|---|---|---|
| No. | | Type | Content (mass%) | Content (mass%) of Mica (** 10 µm) | Content (mass%) of Hydrophobic Slica (**5.5 µm) | Content (mass%) of Hydrophobic Slica (**12 µm) | Content (mass%) of Polyacrylonitril- based microparticles (** 24 µm) | Content (mass%) of Acrylic resin-based microparticles (** 40 µm) | Content (mass%) |
| Ex. | 1 | Polyester Resin | 45 | 0 | 2.1 | 3.9 | 0 | 0 | 49 |
| | 2 | | | | | | | | |
| | 3 | | 41 | 4.5 | 1.5 | 5.0 | 8.0 | 0 | 40 |
| | 4 | | | | | | | | |
| | 5 | | | | | | | | |
| | 6 | | | | | | | | |
| | 7 | | | | | | | | |
| | 8 | | | | | | | | |
| | 9 | | | | | | | | |
| | 10 | | | | | | | | |
| | 11 | | 38 | 4.5 | 1.5 | 5.0 | 7.0 | 4.0 | 40 |
| | 12 | | 38 | 3.5 | 1.5 | 4.0 | 6.0 | 8.0 | 39 |
| Ref. Ex. | 1 | | 38 | 3.0 | 1.5 | 4.5 | 5.0 | 10.0 | 38 |
| Ex. | 13 | Acrylic Resin | 41 | 4.0 | 2.0 | 5.0 | 8.0 | 0 | 40 |
| | 14 | | | | | | | | |
| | 15 | | 38 | 3.0 | 2.0 | 5.0 | 6.0 | 8.0 | 38 |
| | 16 | | | | | | | | |
| Comp. Ex. | 1 | Polyester Resin | 45 | 0 | 2.1 | 3.9 | 0 | 0 | 49 |
| | 2 | | 48 | 0 | 1.0 | 2.0 | 0 | 0 | 49 |
| | 3 | | 45 | 0 | 2.1 | 3.9 | 0 | 0 | 49 |
| | 4 | | 41 | 4.5 | 1.5 | 5.0 | 8.0 | 0 | 40 |
| | 5 | | 38 | 4.5 | 1.5 | 5.0 | 7.0 | 4.0 | 40 |
| | 6 | | 38 | 3.5 | 1.5 | 4.0 | 6.0 | 8.0 | 39 |
| Ref. Ex. | 2 | | 38 | 3.0 | 1.5 | 4.5 | 6.0 | 9.0 | 49 |
| Comp. Ex. | 7 | | 48 | 0 | 1.0 | 2.0 | 0 | 0 | 49 |
| | 8 | | | | | | | | |
| | 9 | | 41 | 4.5 | 1.5 | 5.0 | 8.0 | 0 | 40 |
| | 10 | | | | | | | | |
| | 11 | Acrylic Resin | 41 | 4.0 | 2.0 | 5.0 | 8.0 | 0 | 40 |
| | 12 | | 38 | 3.0 | 2.0 | 5.0 | 6.0 | 8.0 | 38 |
| | 13 | | 41 | 4.0 | 2.0 | 5.0 | 8.0 | 0 | 40 |
| | 14 | | | | | | | | |
| | 15 | | 38 | 3.0 | 2.0 | 5.0 | 6.0 | 8.0 | 38 |
| | 16 | | | | | | | | |

| | | | | | | | | | |
|---|---|---|---|---|---|---|---|---|---|
| Content of each component is the ratio thereof relative to the solid content of the resin composition. ** average particle size | | | | | | | | | |

**[Table 2]**

| No. | | Type of Coating | Si atom conc. on Coating surface (atm%) | Surface roughness Ra of Coating (µm) | Flame treatment amount (kJ/m²) | Corona discharge treatment amount (W·min/m²) | Water contact angle (°) | Methylene iodide sliding angle (°) | O atom conc./ C atom conc. | Rain-streak stain evaluation |
|---|---|---|---|---|---|---|---|---|---|---|
| Ex. | 1 | Polyester Resin | 0.1 | 0.35 | 140 | - | 59 | 16 | 0.27 | Good |
| | 2 | | 0.2 | | 701 | - | 73 | 18 | 0.29 | Good |
| | 3 | | 0.2 | 0.51 | 35 | - | 64 | 18 | 0.29 | Good |
| | 4 | | 0.2 | | 64 | - | 57 | 20 | 0.30 | Excellent |
| | 5 | | 0.2 | | 140 | - | 58 | 22 | 0.34 | Excellent |
| | 6 | | 0.2 | | 234 | - | 64 | 23 | 0.36 | Excellent |
| | 7 | | 0.2 | | 379 | | 68 | 24 | 0.37 | Excellent |
| | 8 | | 0.3 | | 701 | | 71 | 24 | 0.38 | Excellent |
| | 9 | | 0.3 | | 934 | - | 75 | 22 | 0.34 | Excellent |
| | 10 | | 0.4 | | 994 | - | 82 | 19 | 0.29 | Good |
| | 11 | | 0.5 | 1.11 | 140 | - | 56 | 26 | 0.34 | Excellent |
| | 12 | | 0.6 | 2.57 | 140 | - | 54 | 28 | 0.35 | Excellent |
| Ref. Ex. | 1 | | 0.7 | 3.01 | 140 | - | 49 | 33 | 0.35 | Excellent |
| Ex. | 13 | Acrylic Resin | 0.2 | 0.54 | 64 | - | 58 | 20 | 0.30 | Excellent |
| | 14 | | 0.3 | | 701 | - | 69 | 24 | 0.34 | Excellent |
| | 15 | | 0.4 | 2.02 | 64 | - | 56 | 22 | 0.31 | Excellent |
| | 16 | | 0.4 | | 701 | - | 72 | 25 | 0.37 | Excellent |
| Comp. Ex. | 1 | Polyester Resin | 0.1 | 0.35 | 27 | - | 69 | 13 | 0.24 | Poor |
| | 2 | | 0 | 0.24 | - | - | 85 | 6 | 0.18 | Poor |
| | 3 | | 0.1 | 0.35 | - | - | 83 | 7 | 0.19 | Poor |
| | 4 | | 0.2 | 0.51 | - | - | 80 | 7 | 0.20 | Poor |
| | 5 | | 0.5 | 1.11 | - | - | 78 | 8 | 0.20 | Poor |
| | 6 | | 0.6 | 2.57 | - | - | 92 | 10 | 0.21 | Poor |
| Ref. Ex. | 2 | | 0.7 | 3.01 | - | - | 98 | 15 | 0.22 | Excellent |
| Comp. Ex. | 7 | | 0 | 0.24 | 140 | - | 65 | 12 | 0.31 | Poor |
| | 8 | | 0.1 | | 701 | - | 70 | 14 | 0.36 | Poor |
| | 9 | | 0.2 | 0.51 | - | 150 | 60 | 51 | 0.31 | Poor |
| | 10 | | 0.2 | | - | 250 | 58 | 46 | 0.34 | Poor |
| | 11 | Acrylic Resin | 0.2 | 0.54 | - | - | 81 | 7 | 0.18 | Poor |
| | 12 | | 0.4 | 2.02 | - | - | 78 | 9 | 0.19 | Poor |
| | 13 | | 0.2 | 0.54 | - | 150 | 61 | 50 | 0.32 | Poor |
| | 14 | | 0.2 | | - | 250 | 58 | 47 | 0.35 | Poor |
| | 15 | | 0.4 | 2.02 | - | 150 | 58 | 52 | 0.31 | Poor |
| | 16 | | 0.4 | | - | 250 | 55 | 46 | 0.35 | Poor |

As shown in Table 2, when the arithmetic average roughness Ra of the coating surface was 0.3 µm or more and 3.0 µm or less, and the coating surface was subjected to the flame treatment (Examples 1 to 16), the methylene iodide sliding angle became 15° or more and 45° or less, and the rain-streak stain was less likely to be generated for every coating. On the other hand, when the arithmetic average roughness Ra of the surface of a coating after the formation thereof was less than 0.3 µm (Comparative Examples 2, 7 and 8), barriers brought by the irregularities of the coating were small, and thus the methylene iodide sliding angle did not satisfactorily increased (became less than 15°) even with increased hydrophilicity of the surface (when flame treatment was performed), thereby causing hydrophobic carbon to move and gather. As a result, a rain-streak stain was confirmed.

When the arithmetic average roughness Ra was more than 3.0 µm (Reference Examples 1 and 2), meanwhile, the movement of hydrophobic carbon was suppressed as the irregularities on the coating surface act as barriers, and therefore no rain-streak stain was generated regardless of whether the flame treatment was performed or not.

In addition, when the coating surface was subjected to the corona discharge treatment (Comparative Examples 9, 10 and 13 to 16), the hydrophilicity on the surface was increased and thus the O atom concentration / C atom concentration on the surface was increased, but the methylene iodide sliding angle became more than 45° and the rain-streak stain resistance became low. It can be deduced that the introduction of hydrophilic groups became uneven in the corona discharge treatment, and hydrophilic regions and hydrophobic regions were formed in a sea-island structure.

This application claims priority based on Japanese Patent Application No. 2016-152240, filed on August 2, 2016 and Japanese Patent Application No. 2017-59834, filed on March 24, 2017.

### Industrial Applicability

A coated metal sheet obtained by the manufacturing method of present invention is less likely to suffer the generation of a rain-streak stain on the surface thereof. Therefore, the coated metal sheet is applicable to exterior building materials for various buildings and the like.

### Reference Signs List

22 Burner head
22a Housing
22b Burner port
22c Auxiliary burner port
23 Gas supply pipe

## Claims

1. A method for manufacturing a coated metal sheet, the method comprising:
forming a coating on a surface of a metal sheet, the coating having arithmetic average roughness Ra of 0.3 to 3.0 µm and silicon atom concentration of less than 1.0 atm% on a surface of the coating, the arithmetic average roughness Ra being calculated in accordance with JIS B0601:2013, and the silicon atom concentration being measured by X-ray electron spectroscopy using an AlKa ray as an X-ray source; and
subjecting the coating to flame treatment at 30 to 1,000 kJ/m².

2. The method for manufacturing a coated metal sheet according to claim 1, wherein:
the coating contains a polyester resin or an acrylic resin.

3. A coated metal sheet, comprising:
a metal sheet; and
a coating having arithmetic average roughness Ra of 0.3 to 3.0 µm, silicon atom concentration of less than 1.0 atm% on a surface of the coating, and a methylene iodide sliding angle of 15° or more and 45° or less on the surface, the coating being disposed on the metal sheet, the arithmetic average roughness Ra being calculated in accordance with JIS B0601:2013, and the silicon atom concentration being measured by X-ray electron spectroscopy using an AlKa ray as an X-ray source,
wherein the coating is subjected to flame treatment at 30 to 1,000 kJ/m².

4. The coated metal sheet according to claim 3, wherein:
the coating contains a polyester resin or an acrylic resin.

## Patentansprüche

1. Verfahren zum Herstellen eines beschichteten Metallblechs, wobei das Verfahren umfasst:
Ausbilden einer Beschichtung auf einer Oberfläche eines Metallblechs, wobei die Beschichtung eine arithmetische mittlere Rauigkeit Ra von 0,3 bis 3,0 µm und eine Siliciumatomkonzentration von weniger als 1,0 Atom-% auf einer Oberfläche der Beschichtung hat, wobei die arithmetische mittlere Rauigkeit Ra in Übereinstimmung mit JIS B0601:2013 bestimmt wird, und die Siliciumatomkonzentration durch Röntgenelektronenspektroskopie unter Verwendung eines AlKα-Strahls als Röntgenstrahlquelle gemessen wird; und
Unterziehen der Beschichtung einer Flammenbehandlung bei 30 bis 1.000 kJ/m².

2. Verfahren zum Herstellen eines beschichteten Metallblechs nach Anspruch 1, wobei:
die Beschichtung ein Polyesterharz oder ein Acrylharz enthält.

3. Beschichtetes Metallblech, umfassend:
ein Metallblech; und
eine Beschichtung mit einer arithmetischen mittleren Rauigkeit Ra von 0,3 bis 3,0 µm, einer Siliciumatomkonzentration von weniger als 1,0 Atom-% auf einer Oberfläche der Beschichtung, und einem Methyleniodid-Gleitwinkel von 15° oder mehr and 45° oder weniger auf der Oberfläche, wobei die Beschichtung auf dem Metallblech vorgesehen ist, die arithmetische mittlere Rauigkeit Ra in Übereinstimmung mit JIS B0601:2013 bestimmt wird, und die Siliciumatomkonzentration durch Röntgenelektronenspektroskopie unter Verwendung eines AlKα-Strahls als Röntgenstrahlquelle gemessen wird,
wobei die Beschichtung einer Flammenbehandlung bei 30 bis 1.000 kJ/m² unterzogen wird.

4. Beschichtetes Metallblech nach Anspruch 3, wobei:
die Beschichtung ein Polyesterharz oder ein Acrylharz enthält.

## Revendications

1. Procédé de fabrication d'une tôle de métal revêtue, le procédé comprenant :
la formation d'un revêtement sur une surface d'une tôle de métal, le revêtement ayant une rugosité moyenne arithmétique Ra de 0,3 à 3,0 µm et une concentration en atomes de silicium de moins de 1,0 % atomique sur une surface du revêtement, la rugosité moyenne arithmétique Ra étant déterminée conformément à JIS B0601:2013, et la concentration en atomes de silicium étant mesurée par spectroscopie d'électrons à rayons X moyennant un rayon AlKα en tant que source de rayons X ; et
la soumission du revêtement à un traitement à la flamme à 30 à 1 000 kJ/m².

2. Le procédé de fabrication d'une tôle de métal revêtue selon la revendication 1, sachant que :
le revêtement contient une résine de polyester ou une résine acrylique.

3. Tôle de métal revêtue, comprenant :
une tôle de métal ; et
un revêtement ayant une rugosité moyenne arithmétique Ra de 0,3 à 3,0 µm, une concentration en atomes de silicium de moins de 1,0 % atomique sur une surface du revêtement, et un angle de glissement d'iodure de méthylène de 15° ou plus et 45° ou moins sur la surface, le revêtement étant disposé sur la tôle de métal, la rugosité moyenne arithmétique Ra étant déterminée conformément à JIS B0601:2013, et la concentration en atomes de silicium étant mesurée par spectroscopie d'électrons à rayons X moyennant un rayon AlKα en tant que source de rayons X,
sachant que le revêtement est soumis à un traitement à la flamme à 30 à 1 000 kJ/m².

4. La tôle de métal revêtue selon la revendication 3, sachant que :
le revêtement contient une résine de polyester ou une résine acrylique.
